# EUROPÄISCHE PATENTSCHRIFT

(11) **EP 0 704 186 B1**
(45) Veröffentlichungstag und Bekanntmachung des Hinweises auf die Patenterteilung: **10.12.1997**
(21) Anmeldenummer: 95112421.3
(22) Anmeldetag: 08.08.1995
(51) Int. Cl.: A47J 31/56

(54) **Verfahren zur Regelung der Wassertemperatur in einer Brühgetränkemaschine**
Method for regulating the water temperature in al brewing machine
Méthode pour régler la température de l'eau dans une machine à faire des boissons infusées

(30) Priorität: 30.09.1994 DE 4435100
(43) Veröffentlichungstag der Anmeldung: 03.04.1996
(73) Patentinhaber: Braun Aktiengesellschaft, Frankfurt am Main (DE)
(72) Erfinder: Hild, Holger, D-65510 Idstein (DE); Schotte, Dietwald, D-65760 Eschborn (DE)

(56) Entgegenhaltungen:
- EP-A- 0 267 649
- EP-A- 0 380 369
- DE-C- 3 642 181
- FR-A- 2 586 522
- GB-A- 2 191 024

## Beschreibung

Die vorliegende Erfindung betrifft ein Verfahren zur Regelung der Wassertemperatur in einer Brühgetränkemaschine.

Bei herkömmlichen Brühgetränkemaschinen, die üblicherweise im Haushalt Verwendung finden, wie z. B. Kaffee- oder Espressomaschinen, erfolgt eine Erwärmung des Wassers, indem mittels einer Pumpe kaltes Wasser aus einem Wasservorratsbehälter durch einen Durchlauferhitzer gefördert wird und anschließend durch das Kaffeepulver bzw. das Espressomehl läuft. Die Wassertemperatur hängt dabei von der Verweildauer des Wassers in dem Durchlauferhitzer ab derart, daß bei einer hohen Fließgeschwindigkeit des Wassers und einer daraus resultierenden kurzen Verweildauer des Wassers in dem Durchlauferhitzer eine vergleichsweise niedrige Wassertemperatur erzielt wird und indem bei einer niedrigen Fließgeschwindigkeit des Wassers und einer damit verbundenen langen Verweildauer des Wassers in dem Durchlauferhitzer eine vergleichsweise hohe Wassertemperatur erzielt wird.

Andererseits ist auch eine Brühgetränkemaschine bekannt, bei der das Wasser in einem sogenannten offenen Wasserbehälter, bei dem das Wasser immer unter Atmosphärendruck steht, zunächst erhitzt wird und bei der dann das Wasser mittels einer Pumpe durch das Kaffee- bzw. Espressomehl gefördert wird.

Gegenüber der erstgenannten Ausführungsform hat diese zweite Ausführungsform den Vorteil, daß zunächst das Wasser auf eine bestimmte Temperatur geregelt werden kann, bevor es durch das Kaffeemehl und insbesondere das Espressomehl gefördert wird. Dies wirkt sich insbesondere dann vorteilhaft aus, wenn beim Brühen von Espresso die beiden für die Qualität des Espressos maßgeblichen Parameter, Temperatur und Druck, unabhängig voneinander eingestellt werden sollen. Bei den Brühgetränkemaschinen nach der ersten Ausführungsform, bedeutet nämlich eine Erhöhung des Druckes eine Erhöhung der Förderrate der Pumpe und damit gleichzeitig eine Erniedrigung der Wassertemperatur. Bei den Brühgetränkemaschinen nach der ersten Ausführungsform ist also somit keine unabhängige Regelung dieser beiden Parameter möglich.

Es ist weiterhin ein Verfahren gemäß dem Oberbegriff des Anspruchs 1 bekannt (EP 0 380 369 A1), bei dem bei einer Erwärmung des Wassers die zeitliche Änderung der Temperatur gemessen wird. Das Erreichen des Siedepunktes wird dann erkannt, wenn die zeitliche Änderung der Temperatur abfällt bzw. "0" wird. Beim Erreichen des Siedepunktes findet trotz weiterer Energiezufuhr, keine weitere Erwärmung des Wassers statt, da bei dieser Temperatur ein Phasenübergang des Wassers von dem Aggregatzustand flüssig in den Aggregatzustand dampfförmig erfolgt und die zugeführte Energie benötigt wird, um dem Wasser die für den Phasenübergang benötigte latente Wärme zuzuführen. Bei diesem Verfahren wird also aus der zeitlichen Änderung der Temperatur abgeleitet, wann der Siedepunkt des Wassers erreicht wird, indem die zeitliche Änderung der Temperatur mit einem Schwellwert verglichen wird und, wenn dieser Schwellwert, der in der Größenordnung von "0" liegt, unterschritten wird, dann zu erkennen, daß der Siedepunkt des Wassers erreicht ist.

Demgegenüber arbeitet das erfindungsgemäße Verfahren anders. Die Temperatur T_{HIGH} kann dabei in vorteilhafter Weise in einer Größenordnung zwischen 75 Grad C und 80 Grad C liegen. Durch die Auswertung des zeitlichen Anstieges der Temperatur bis zum Erreichen dieser Temperatur T_{HIGH} ist es möglich, einen Temperatursensor zu verwenden, der hinsichtlich der Meßgenauigkeit nur geringeren Anforderungen genügen muß, als dies bei dem Stand der Technik der Fall ist. Ein weiterer Vorteil ergibt sich daraus, daß bei dem erfindungsgemäßen Verfahren ein trägeres Sensorsystem verwendet werden kann. Es ist also nicht mehr notwendig, den Temperatursensor unmittelbar mit dem Wasser in Berührung zu bringen, um möglichst schnell ein entsprechendes Sensorsignal genau in dem Moment zu erhalten, wenn das Wasser die Siedetemperatur erreicht. Beim Aufheizen bis zur Temperatur T_{HIGH} ist ein mit der Zeit relativ starkes Ansteigen der Temperatur des Wassers zu beobachten. Bei der Auswertung dieses relativ starken Anstieges der Temperatur bewirkt ein absoluter Meßfehler des Temperatursensors einen geringeren relativen Meßfehler als dies beim Stand der Technik der Fall ist, wo Anstiegswerte der Temperatur in der Größenordnung von "0" ausgewertet werden müssen. Absolute Fehler des Temperatursensors bei den einzelnen Messungen spielen dort eine wesentlich größere Rolle. Ab dem Erreichen der Temperatur T_{HIGH} läuft die weitere Aufheizphase des Wassers dann nur noch zeitgesteuert ab, so daß also eine Auswertung der geringen Temperaturanstiege mit der Zeit beim Erreichen des Siedepunktes nicht mehr notwendig ist. Durch Berücksichtigung der zeitlichen Änderung der Temperatur mit der Zeit, wird beim weiteren Aufheizen berücksichtigt, welche Wassermenge sich in dem Wasserbehälter befindet. Befindet sich nur eine relativ geringe Wassermenge in dem Wasserbehälter, so bedeutet dies, daß bis zum Erreichen der Temperatur T_{HIGH} eine relativ starke zeitliche Änderung der Temperatur zu beobachten war und daß eine vergleichsweise geringere Zeit bis zum Erreichen des Siedepunktes benötigt wird. Wenn eine größere Wassermenge in dem Wasserbehälter ist, bedeutet dies, daß die zeitliche Änderung der Temperatur relativ gering ist, und daß eine größere Zeit benötigt wird, um diese größere Wassermenge bis zum Siedepunkt zu erhitzen. Außerdem spielt für die Zeit, die das Wasser nach Erreichen der Temperatur T_{HIGH} weiterhin erhitzt werden muß, die Temperaturdifferenz zwischen der Temperatur der Größenordnung von 100 Grad C und T_{HIGH} eine Rolle. Wenn die Zeit unmittelbar aus dieser Temperaturdifferenz 100 Grad C und T_{HIGH} ermittelt wird, ist die Zeit, während der weitergeheizt wird, hinreichend, um unter Atmosphärendruck von 1 bar das Wasser auf die Temperatur von 100 Grad C zu erhitzen. Wenn aufgrund geringeren Luftdruckes allerdings der Siedepunkt unter 100 Grad C liegt, so ist die Zeit t_{heiz} unter Umständen zu lange bemessen. Das bedeutet aber, daß trotzdem der Siedepunkt des Wassers sicher erreicht wird. Es wird lediglich beim Erreichen des Siedepunktes unter Umständen noch für eine gewisse Zeit weitergeheizt.

Bei dem erfindungsgemäßen Verfahren zeigt sich als Vorteil gegenüber dem Stand der Technik, daß das Verfahren relativ unempfindlich ist gegen Nachfüllen von kaltem Wasser. Wenn bei dem Verfahren nach dem Stand der Technik kaltes Wasser nachgefüllt wird, so kann es vorkommen, daß aufgrund des Mischungsverhältnisses von dem bereits erhitzten Wasser und dem nachgefüllten kalten Wasser, für eine kurze Zeit ein Temperaturanstieg der Größenordnung von "0" stattfindet. Wenn in diesem Falle gerade die zeitliche Änderung der Temperatur abgeleitet wird und dabei dieser Anstieg der Größenordnung von "0" erkannt wird, so wird bei dem Verfahren nach dem Stand der Technik daraus geschlossen, daß der Siedepunkt des Wassers erreicht ist. Bei dem Verfahren nach dem Stand der Technik wird also der Siedepunkt dann erkannt, wenn kaltes Wasser nachgefüllt ist und das Wasser in Wirklichkeit aber noch gar nicht den Siedepunkt erreicht hat.

Durch die Ableitung der Zeit, während der weitergeheizt wird, nachdem die Temperatur T_{HIGH} erreicht wurde, aus der zeitlichen Änderung der Temperatur vor dem Erreichen der Temperatur T_{HIGH}, ist es daher in vorteilhafter Weise möglich, den Siedepunkt des Wassers gegenüber dem Verfahren nach dem Stand der Technik sicher zu erreichen. Bei dem Verfahren nach Anspruch 2 wird, in Erweiterung des Verfahrens nach Anspruch 1, zusätzlich noch unterschieden, ob die Temperatur Tᵢ, die das Wasser hat, bevor der Aufheizvorgang insgesamt beginnt, oberhalb oder unterhalb einer Temperatur T_{LOW} liegt, die einen Wert der Größenordnung von 60 Grad C aufweist. Wenn nämlich die Temperatur Tᵢ des Wassers vor Beginn des Aufheizvorganges größer ist als diese Temperatur T_{LOW}, aber immer noch kleiner als die Temperatur T_{HIGH}, so kann es vorkommen, daß mit einer Auswertung der zeitlichen Änderung der Temperatur bis zum Erreichen der Temperatur T_{HIGH}, sich mögliche Meßfehler aufgrund des verwendeten Sensors zu stark auswirken. Um in diesem Falle ein sicheres Erreichen des Siedepunktes zu ermöglichen, wird daher bei dem Verfahren nach Anspruch 2 im Falle, daß die Temperatur Tᵢ zwischen der Temperatur T_{LOW} und der Temperatur T_{HIGH} liegt, nach dem Erreichen der Temperatur T_{HIGH} während einer bestimmten Zeit weitergeheizt, die unabhängig von der zeitlichen Änderung der Temperatur bis zum Erreichen der Temperatur T_{HIGH} ist. Diese bestimmte Zeit t_{koch} wird dabei ermittelt aus den Parametern 100 Grad C, T_{HIGH}, derart, daß das Wasser im voll gefüllten Heizbehälter während dieser bestimmten Zeit auf diesen Siedepunkt von 100 Grad C aufgeheizt werden kann.

Bei der Ausbildung des Verfahrens gemäß Anspruch 3 wird die Zeit t_{HEIZ}, während der nach Erreichen der Temperatur T_{HIGH} weitergeheizt wird, in direkter Abhängigkeit von der Temperaturdifferenz zwischen T_{HIGH} und 100 Grad C, sowie umgekehrt proportional zur zeitlichen Änderung der Temperatur, bestimmt. Dadurch wird in vorteilhafter Weise berücksichtigt, daß bei Zufuhr einer konstanten Wärmemenge pro Zeiteinheit die Zeit, während der diese Wärmemenge zugeführt werden muß, proportional ist der Temperaturdifferenz, um die eine Temperaturerhöhung stattfinden soll, sowie der Wärmekapazität des Stoffes, der um diese Temperaturdifferenz erwärmt werden soll. Die Wärmekapazität, d. h. letztlich die Menge des Wassers, kann dabei bestimmt werden aus der zeitlichen Änderung der Temperatur bis zum Erreichen der Temperatur T_{HIGH}.

Bei der Ausbildung des Verfahrens nach Anspruch 4 können möglicherweise bei der Ermittlung der einzelnen Werte der zeitlichen Änderung der Temperatur auftretende Meßfehler durch die Mittelwertbildung eliminiert werden.

Bei der Ausbildung des Verfahrens nach Anspruch 5 ist es möglich, in vorteilhafter Weise zu berücksichtigen, ob kaltes Wasser nachgefüllt wird oder nicht. Es ergibt sich nämlich ein Mindestwert der zeitlichen Änderung der Temperatur, der dem Wert der Temperaturänderung entspricht, wenn der Wasserbehälter voll gefüllt ist. Bei voll gefülltem Wasserbehälter steigt die Temperatur nämlich vergleichsweise langsam an. Wenn man diesen langsamen Anstieg bei der Ausbildung des Verfahrens gemäß Anspruch 5 als vorgegebenen Mindestwert heranzieht, kann abgeleitet werden, wenn eine zeitliche Änderung der Temperatur unterhalb dieses Mindestwertes auftritt, daß dann offensichtlich kaltes Wasser nachgefüllt worden ist. Es ist vorteilhaft, diese Werte der zeitlichen Änderung der Temperatur dann bei der Ermittlung der Zeit, während der weiterhin geheizt werden soll, nicht zu berücksichtigen.

Besonders vorteilhaft zeigt sich bei der Ausgestaltung des Verfahrens nach Anspruch 6, daß die Zeit, während der weiterhin geheizt werden soll, auf die tatsächlich in dem Wasserbehälter befindliche Wassermenge bezogen ist. Wenn nämlich gemäß der Ausgestaltung des Verfahrens nach Anspruch 5 festgestellt worden ist, daß kaltes Wasser nachgefüllt wurde, so ist im Anschluß an diesen Auffüllvorgang eine größere Wassermenge in dem Wasserbehälter vorhanden. In vorteilhafter Weise muß also die Zeit t_{heiz}, während der weitergeheizt werden soll, dann auf diese nach dem Auffüllvorgang größere Wassermenge bezogen werden. Dies erfolgt bei der Ausgestaltung des Verfahrens nach Anspruch 6 dadurch, indem nur die Werte der zeitlichen Änderung der Temperatur berücksichtigt werden, die nach dem Auffüllvorgang ermittelt wurden.

In vorteilhafter Weise wird bei der Ausgestaltung des Verfahrens nach den Ansprüchen 7 und 8 eine Wassertemperatur erreicht, die, entsprechend der bestimmten Zeit gemäß Anspruch 8, einem Wert unterhalb der Siedetemperatur entspricht.

Bei der Ausgestaltung des Verfahrens nach Anspruch 9 wird in vorteilhafter Weise berücksichtigt, ob während der Abkühlphase kaltes Wasser in den Wasserbehälter nachgefüllt wird. Wenn nämlich die Heizung abgeschaltet ist und sich das Wasser abkühlt, ergibt sich ein maximaler Wärmeübergang, der zu einem unteren Grenzwert der zeitlichen Änderung der Temperatur führt. Wenn also dieser Grenzwert der zeitlichen Änderung der Temperatur unterschritten wird, so liegt dies daran, daß kaltes Wasser in den Wasserbehälter nachgefüllt wurde. Um dann ein Aufbrühen des Getränkes mit Wasser von zu niedriger Temperatur zu vermeiden, wird, nachdem dieser Auffüllvorgang erkannt wurde, für eine Zeitdauer t_{koch}, entsprechend den Angaben zu Anspruch 2, das Wasser weitergeheizt und anschließend erneut, wiederum für eine bestimmte Zeit, durch Abschalten der Heizung abgekühlt.

Bei der Ausgestaltung des Verfahrens nach Anspruch 10 wird ein zu starker Abfall der Temperatur vermieden, indem die Wassertemperatur konstant auf den Wert geregelt wird, der sich nach Ablauf der bestimmten Zeit, d. h. der Abkühlphase eingestellt hat.

Ein Ausführungsbeispiel der Erfindung ist in der Zeichnung dargestellt.

Es zeigen dabei:
- Fign. 1 bis 5: verschiedene Zeitverläufe der Wassertemperatur,
- Fig. 6: ein Diagramm des Ablaufes des erfindungsgemäßen Verfahrens sowie
- Fign. 7 und 8: Teile des Verfahrens, die an den entsprechenden Stellen in Fig. 6 einzufügen sind.

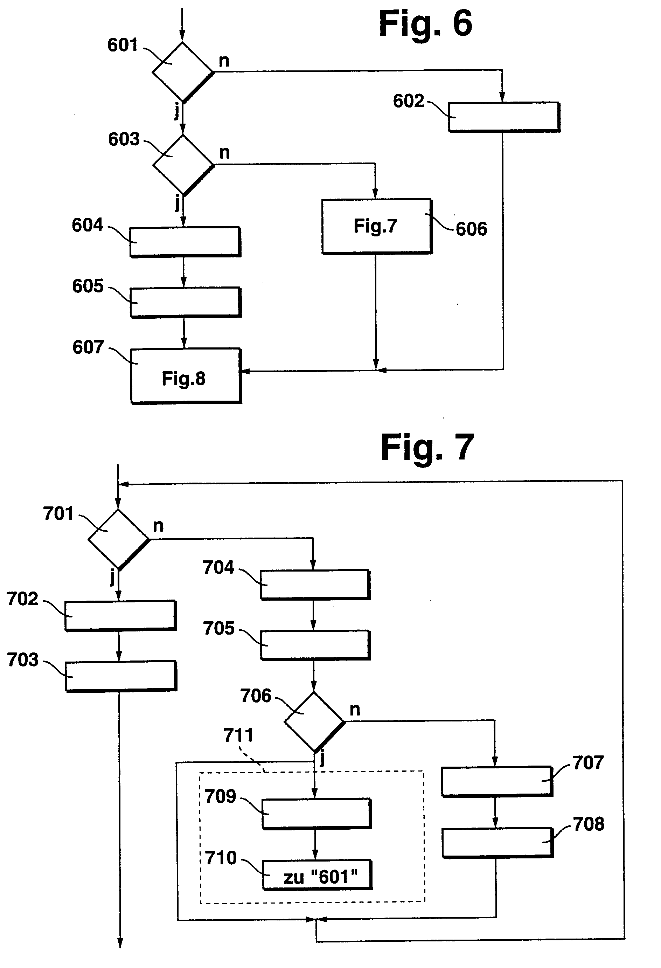

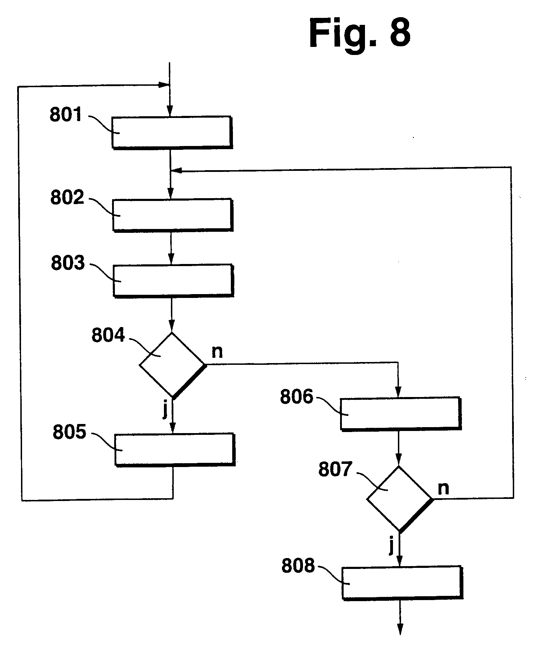

Fig. 6 zeigt ein Ablaufdiagramm des erfindungsgemäßen Verfahrens. Dabei wird zunächst in dem Schritt 601 geprüft, ob die Temperatur des Wassers Tᵢ vor Beginn des Heizvorgangs kleiner ist als eine Temperatur T_{HIGH}. Diese Temperatur T_{HIGH} liegt dabei vorteilhafterweise in einer Größenordnung zwischen 75 Grad C und 80 Grad C. Dieser Wert der Temperatur ist so gewählt, weil das Wasser bei dieser Temperatur auch unter extremen Bedingungen hinsichtlich des Luftdruckes sicher noch nicht siedet. Wenn diese Bedingung nicht erfüllt ist, d. h. daß die Temperatur des Wassers zu Beginn des Heizvorganges Tᵢ größer oder gleich der Temperatur T_{HIGH} ist, erfolgt ein Übergang zu dem Schritt 602. In dem Schritt 602 wird das Wasser aufgeheizt während einer Zeitdauer t_{koch}. Diese Zeitdauer t_{koch} ist dabei so bemessen, daß bei einem voll gefüllten Wasserbehälter bei eingeschalteter Heizung durch ein Aufheizen während dieser Zeit t_{koch} sich das Wasser von der Temperatur T_{HIGH} auf 100 Grad C erwärmt, sofern die Siedetemperatur des Wassers 100 Grad C beträgt. Ist nun aufgrund der Umgebungsbedingungen die Siedetemperatur des Wassers kleiner als 100 Grad C, so bedeutet dies, daß durch das Aufheizen während der Zeit t_{koch} die Siedetemperatur erreicht wird und das Wasser dann weitergeheizt wird für einige Zeit, nachdem es die Siedetemperatur erreicht hat. Wichtig ist dabei aber, daß das Wasser die Siedetemperatur erreicht. Nachdem das Wasser dann während dieser Zeitdauer t_{koch} erhitzt wurde, erfolgt ein Übergang zu dem Schritt 607, der vollständig in der Fig. 8 dargestellt ist und weiter unten noch beschrieben wird.

Wurde die Frage 601 mit "ja" beantwortet, d. h. ist die Temperatur des Wassers vor Beginn des Heizvorganges Tᵢ kleiner als die Temperatur T_{HIGH}, so erfolgt ein Übergang zu dem Schritt 603. In diesem Schritt 603 wird überprüft, ob die Temperatur Tᵢ des Wassers vor Beginn des Heizvorganges größer ist als eine Temperatur T_{LOW}. Diese Temperatur T_{LOW} liegt dabei in einer Größenordnung von 60 Grad C. Ist dies nicht der Fall, erfolgt in dem Schritt 603 ein Übergang zu dem Schritt 606. Das heißt, daß in diesem Fall die Temperatur Tᵢ kleiner ist als die Temperatur T_{LOW}. Der Ablauf des Verfahrens in dem Schritt 606 ist vollständig in Fig. 7 beschrieben und wird weiter unten näher erläutert.

Wenn die Abfrage in dem Schritt 603 mit "ja" beantwortet wird, das heißt, daß dann die Temperatur Tᵢ zwischen dem Wert T_{LOW} und T_{HIGH} liegt, wird in dem Schritt 604 das Wasser zunächst auf die Temperatur T_{HIGH} erwärmt. Anschließend wird das Wasser weitergeheizt während der Zeitdauer t_{koch}, die identisch ist zu der Zeitdauer t_{koch} in dem Schritt 602. Dieser Ablauf des Verfahrens in den Schritten 604 und 605 kann dann zweckmäßig sein, wenn eine Bestimmung der zeitlichen Änderung der Temperatur schwierig ist, weil sich die Temperatur des Wassers bei Beginn des Heizvorganges bereits zu dicht an der Temperatur T_{HIGH} befunden hat und somit die zeitliche Änderung der Temperatur nur ungenau bestimmt werden kann. Wenn anschließend die Zeit, während der das Wasser nach Erreichen der Temperatur T_{HIGH} weitergeheizt werden soll, aus dieser nur ungenau bestimmten Steigung ermittelt werden soll, kann es dann möglicherweise zu Fehlern bei der Bestimmung der Zeit kommen. Es ist in einer Abwandlung des Verfahrens jedoch selbstverständlich möglich, die Zeitdauer t_{heiz} in jedem Falle aus der zeitlichen Änderung der Temperatur abzuleiten, sofern nur die Temperatur Tᵢ kleiner ist als die Temperatur T_{HIGH}.

Der Schritt 606 der Fig. 6 wird vollständig in Zusammenhang mit der Fig. 7 beschrieben. Dabei wird zunächst in dem Schritt 701 überprüft, ob während des Aufheizens das Wasser die Temperatur T_{HIGH} erreicht hat. Wenn dies der Fall ist, erfolgt ein Übergang zu dem Schritt 702, in dem das Wasser weitergeheizt wird während der Zeitdauer t_{heiz}. Diese Zeitdauer t_{heiz} ergibt sich dabei aus den berechneten Werten der zeitlichen Temperaturänderung. Diese Zeitdauer t_{heiz} kann z. B. berechnet werden, indem die Differenz der Temperatur 100°C und T_{HIGH} geteilt wird durch den ermittelten Wert der zeitlichen Änderung der Temperatur dT/dt, bzw. die Größe "Mittelwert". Nachdem das Wasser während der Zeitdauer t_{heiz} weitergeheizt wurde, erfolgt in dem Schritt 703 ein Reset von Variablen, die in dem Ablauf des Verfahrens verwendet wurden. Diese Variablen haben die Namen "Stützstellen" sowie "Mittelwert", und werden in Zusammenhang mit der Fig. 7 an anderer Stelle erläutert. Im Anschluß an den Schritt 703 erfolgt gemäß der Darstellung der Fig. 6 ein Übergang zu dem Schritt 607, der in Zusammenhang mit der Fig. 8 weiter unten erläutert werden wird.

Wenn die Prüfung in dem Schritt 701 ergibt, daß das Wasser die Temperatur T_{HIGH} noch nicht erreicht hat, erfolgt ein Übergang zu dem Schritt 704, in dem das Wasser weitergeheizt wird. In dem Schritt 705 wird die zeitliche Änderung der Temperatur des Wassers dT/dt ermittelt. Dies kann beispielsweise erfolgen, indem zu zwei verschiedenen Zeitpunkten die Werte der Temperatur voneinander subtrahiert werden und durch die Zeitdauer zwischen diesen beiden Zeitpunkten dividiert wird. Solange das Wasser aufgeheizt wird, ergibt sich ein Mindestwert der zeitlichen Änderung der Temperatur, der dann auftritt, wenn der Wasserbehälter voll gefüllt ist. Wenn nun aber die zeitliche Änderung der Temperatur unter diesem Mindestwert liegt, so kann daraus geschlossen werden, daß eine Störung vorliegt, in dem Sinne, daß kaltes Wasser in den Wasserbehälter nachgefüllt wurde. Um nun eine Verfälschung der zeitlichen Temperaturänderung durch diese Werte der zeitlichen Änderung der Temperatur zu vermeiden, ist es im einfachsten Falle möglich, diese Werte der zeitlichen Änderung der Temperatur unberücksichtigt zu lassen. Andererseits gibt es einen vorgebbaren Maximalwert mₘₐₓ der zeitlichen Änderung der Temperatur, der dann erreicht wird, wenn das Aufheizen bei einem nahezu leeren Wasserbehälter erfolgt. Wird dieser vorgebbare Maximalwert der zeitlichen Änderung der Temperatur überschritten, so kann daraus abgeleitet werden, daß heißes Wasser während des Aufheizvorganges in den Wasserbehälter nachgefüllt wurde. In dem Schritt 706 wird daher überprüft, ob die zeitliche Änderung der Temperatur kleiner ist, als dieser vorgegebene Mindestwert mₘᵢₙ, der sich ergibt, wenn ein voll gefüllter Wasserbehälter aufgeheizt wird oder aber ob die zeitliche Änderung der Temperatur größer ist als der vorgebbare Maximalwert mₘₐₓ. Wird diese Überprüfung in dem Schritt 706 mit "ja" beantwortet, so ist es möglich, entsprechend dem Pfeil 711 diese Werte der zeitlichen Änderung der Temperatur unberücksichtigt zu lassen. In vorteilhafter Weise erfolgt jedoch ein Übergang zu dem Schritt 709. Es ist nämlich so, daß, nachdem Wasser nachgefüllt worden ist, die Wassermenge zugenommen hat, so daß auch die zeitliche Änderung der Temperatur eine andere ist, als sie dies war, bevor das Wasser nachgefüllt wurde. Da also im Falle der Verwendung mehrerer Stützstellen die bisher ermittelten Werte zu einer Wassermenge gehört haben, die nun nicht mehr aktuell ist, ist es vorteilhaft, die bisher ermittelten Werte zu löschen und zu vernachlässigen. Deshalb werden in dem Schritt 709 die entsprechenden Variablen namens "Mittelwert" und "Stützstellen" auf "0" gesetzt, und entsprechend dem Schritt 710 erfolgt ein Übergang zu dem Schritt 601, das heißt, daß das Verfahren zum Erreichen der Siedetemperatur von neuem begonnen wird.

Wenn die Überprüfung in dem Schritt 706 ergeben hat, daß der Wert der zeitlichen Änderung der Temperatur größer oder gleich dieses Mindestwertes der zeitlichen Änderung der Temperatur ist und gleichzeitig kleiner als der vorgebbare Maximalwert, so wird in den Schritten 707 und 708 der Mittelwert der zeitlichen Änderung der Temperatur neu berechnet. Dies erfolgt dadurch, indem in dem Schritt 707 eine Variable namens "Stützstellen" erhöht wird. In dem Schritt 708 wird dann der Mittelwert neu berechnet, indem dieser eine Wert der zeitlichen Änderung der Temperatur, der sich aktuell eingestellt hat, mit entsprechender Gewichtung bei dem Mittelwert dazugerechnet wird. Dies kann erfolgen, indem der bisher ermittelte Mittelwert multipliziert wird mit der um 1 verminderten Variablen "Stützstellen", indem anschließend die aktuell ermittelte zeitliche Änderung der Temperatur dazu addiert wird und indem diese Summe durch die Variable "Stützstellen" geteilt wird. Es ist ebenso möglich, andere Arten der Mittelwertbildung vorzusehen. So können beispielsweise einzelne Werte der zeitlichen Änderung der Temperatur gespeichert werden. Die Mittelwertbildung erfolgt dann, wenn die Temperatur T_{High} erreicht wird. Da der Speicherplatz begrenzt ist, müssen dann aber die zur Mittelwertbildung heranzuziehenden Werte der zeitlichen Änderung der Temperatur auf einen bestimmten Zeitabschnitt vor Erreichen der Temperatur T_{High} beschränkt werden. Entsprechend der Darstellung der Fig. 7 erfolgt dann ein weiterer Übergang zu dem Schritt 701, so daß die Fig. 7 also entsprechend der bisherigen Beschreibung erneut durchlaufen wird.

Abweichend davon ist es auch möglich, wenn in dem Schritt 706 die Überprüfung mit "ja" beantwortet wurde, das Wasser bis zum Erreichen der Temperatur T_{High} weiterzuheizen und nach Erreichen der Temperatur T_{High} während der Zeitdauer t_{koch} weiterzuheizen. Dies ist besonders vorteilhaft dann, wenn eine zeitliche Änderung der Temperatur erkannt wurde, die größer als der vorgebbare Maximalwert ist.

Fig. 8 zeigt den Schritt 607 nach Fig. 6. Es wurde also die Siedetemperatur des Wassers erreicht, so daß in dem Schritt 801 die Variable TIMER zurückgesetzt wird. Diese Variable dient dazu, die Abkühlphase zu überwachen, nachdem das Wasser die Siedetemperatur erreicht hat. Von dem Schritt 801 erfolgt ein Übergang zu dem Schritt 802, in dem das Wasser abgekühlt wird. Dies erfolgt, indem bei abgeschalteter Heizung der Wasserbehälter sich selbst überlassen wird. In dem Schritt 803 wird während dieser Abkühlphase die zeitliche Änderung der Temperatur ermittelt. Es gibt nämlich einen Wert der Steigung m_{grenz}, der sich in der Abkühlphase als minimale zeitliche Änderung der Temperatur einstellt. Dieser Wert ergibt sich bei leerem Wasserbehälter. Wenn eine zeitliche Änderung der Temperatur auftritt, die unterhalb dieses Wertes m_{grenz} liegt, so kann daraus geschlossen werden, daß in der Abkühlphase wiederum kaltes Wasser nachgeschüttet wurde. Dies ist dann der Fall, wenn die Überprüfung in dem Schritt 804 mit "ja" beantwortet wurde, das heißt, daß die zeitliche Änderung der Temperatur kleiner ist als der Wert der Steigung m_{grenz}. In diesem Falle wird in dem Schritt 805 eine erneute Aufheizphase für eine Zeitdauer t_{koch} eingeleitet, sofern die Wassertemperatur größer ist als T_{HIGH}. Andernfalls wird in dem Schritt 805 das Wasser zunächst auf die Temperatur T_{HIGH} erhitzt und anschließend während der Zeitdauer t_{koch} weitergeheizt. Im Anschluß an den Schritt 805 erfolgt dann erneut ein Übergang zu dem Schritt 801.

Ergibt sich bei der Überprüfung in dem Schritt 804, daß die zeitliche Änderung der Temperatur größer oder gleich dem Wert der Steigung m_{grenz} ist, so erfolgt ein Übergang zu dem Schritt 806. In diesem Schritt wird die Variable TIMER inkrementiert. Es erfolgt im Anschluß ein Übergang zu dem Schritt 807, in dem überprüft wird, ob die Variable TIMER die vorgegebene Zeitdauer t_{kühl} erreicht hat. Ist dies nicht der Fall, erfolgt ein Übergang zu dem Schritt 802. Wenn die Variable TIMER den Wert der Zeitdauer t_{kühl} erreicht hat, erfolgt ein Übergang zu dem Schritt 808, in dem dann das Wasser auf die Temperatur konstant geregelt wird, die sich zu diesem Zeitpunkt eingestellt hat.

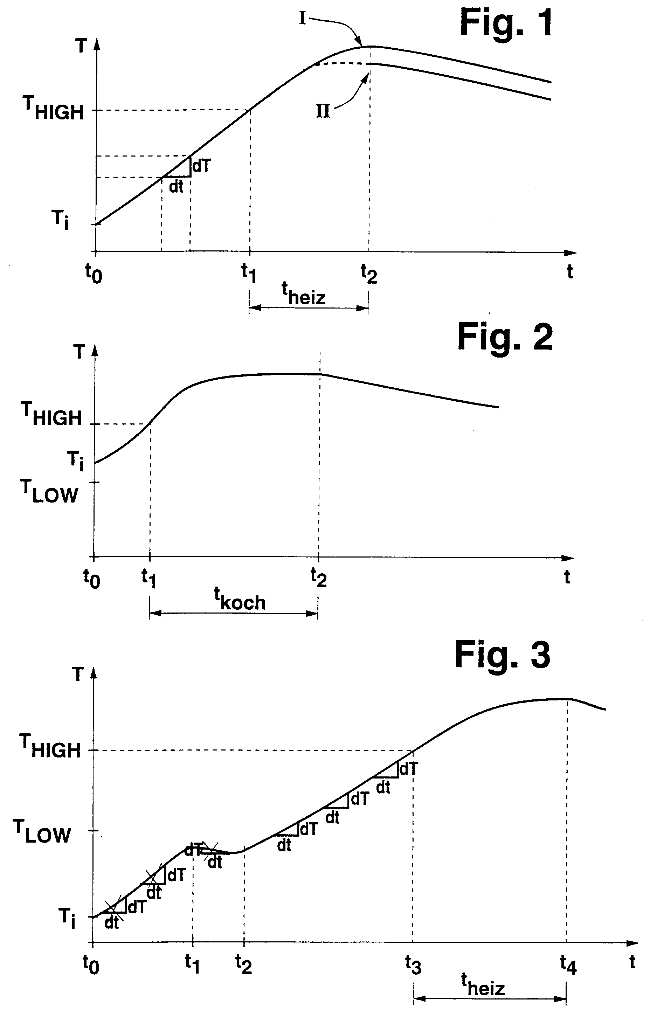

Die Fign. 1 bis 5 zeigen verschiedene zeitliche Änderungen der Temperatur die im folgenden noch erläutert werden. Fig. 1 zeigt dabei, daß das Wasser ausgehend von einer Temperatur Tᵢ erhitzt wird, die kleiner ist als die Temperatur T_{HIGH}. Entsprechend dem dargestellten Dreieck dT/dt, wird dabei die zeitliche Änderung der Temperatur ermittelt, indem zu den beiden Zeitpunkten die jeweiligen Werte der Temperatur voneinander abgezogen werden und durch die Zeitdauer zwischen den beiden Zeitpunkten geteilt wird. Zum Zeitpunkt t₁ hat das Wasser dann die Temperatur T_{HIGH} erreicht. Aus der ermittelten Steigung dT/dt wird dann die Zeitdauer t_{heiz} ermittelt, während der das Wasser nach Erreichen der Temperatur T_{HIGH} weiter erhitzt wird. Es zeigt sich dabei, daß in Abhängigkeit von der Siedetemperatur sich ein Kurvenverlauf nach der Kurve I oder auch nach der Kurve II einstellen kann. Der Verlauf nach der Kurve I entspricht dabei dem Fall, daß die Siedetemperatur des Wassers 100 Grad C beträgt, das heißt, daß durch das Aufheizen während der Zeitdauer t_{heiz} das Wasser seine Siedetemperatur erreicht, da die Zeitdauer t_{heiz} anhand der Steigung dT/dt ermittelt wurde. Liegt die Siedetemperatur entsprechend der Kurve II nun unter 100 Grad C, so erreicht das Wasser bereits während der Zeitdauer der Phase t_{heiz} diese Siedetemperatur und siedet für einen Teil dieser Zeitdauer vor sich hin.

Entsprechend der Darstellung der Fig. 2 wird dort das Wasser von einer Temperatur Tᵢ ausgehend erhitzt, die zwischen der Temperatur T_{LOW} und T_{HIGH} liegt. Es wird daher beim Erreichen der Temperatur T_{HIGH} zum Zeitpunkt t₁ das Wasser für eine Zeitdauer t_{koch} weiter erhitzt. Diese Zeitdauer t_{koch} ist dabei auf einen voll gefüllten Wasserbehälter zugeschnitten, so daß bei einem nur teilweise gefüllten Wasserbehälter, wie in der Darstellung der Fig. 2, die Siedetemperatur bereits während der Zeitdauer t_{koch} erreicht wird.

Der zeitliche Temperaturablauf der Fig. 3 zeigt, daß das Wasser ausgehend von einer Temperatur Tᵢ erhitzt wird, die unterhalb der Temperatur T_{LOW} liegt. In dem Zeitraum zwischen t₀ und t₁ werden bereits zeitliche Änderungen der Temperatur ermittelt und in einer Mittelwertbildung berücksichtigt. Zum Zeitpunkt t₁ wird dabei kaltes Wasser nachgefüllt, was sich daraus ableiten läßt, daß die zeitliche Änderung der Temperatur dT/dt kleiner ist als der Wert mₘᵢₙ. Im Beispiel der Fig. 3 ist dieser Wert dT/dt sogar negativ. Zum Zeitpunkt t₂ steigt die Temperatur dann wieder an, wobei sich auch sehen läßt, daß der Anstieg der Temperatur nach dem Zeitpunkt t₂ langsamer ist als zwischen dem Zeitpunkt t₀ und t₁. Dies ist dadurch begründet, daß sich eine größere Wassermenge in dem Wasserbehälter befindet, so daß der Temperaturanstieg des Wassers beim Erhitzen langsamer vonstatten geht. Zwischen der Zeitdauer t₂ und t₃ beim Erreichen der Temperatur T_{HIGH}, werden weitere Werte der zeitlichen Änderung der Temperatur ermittelt. Entsprechend der Darstellung der Fig. 3 zeigt sich, daß die Werte der zeitlichen Änderung der Temperatur bis zum Erreichen des Zeitpunktes t₂ verworfen werden, so daß für die Mittelwertbildung nur die Werte der zeitlichen Änderung der Temperatur berücksichtigt werden, die zwischen den Zeitpunkten t₂ und t₃ ermittelt wurden. Aus diesen Werten wird dann die Zeitdauer t_{heiz} ermittelt, während der das Wasser ab dem Zeitpunkt t₃ bis zum Zeitpunkt t₄ weiter erhitzt wird.

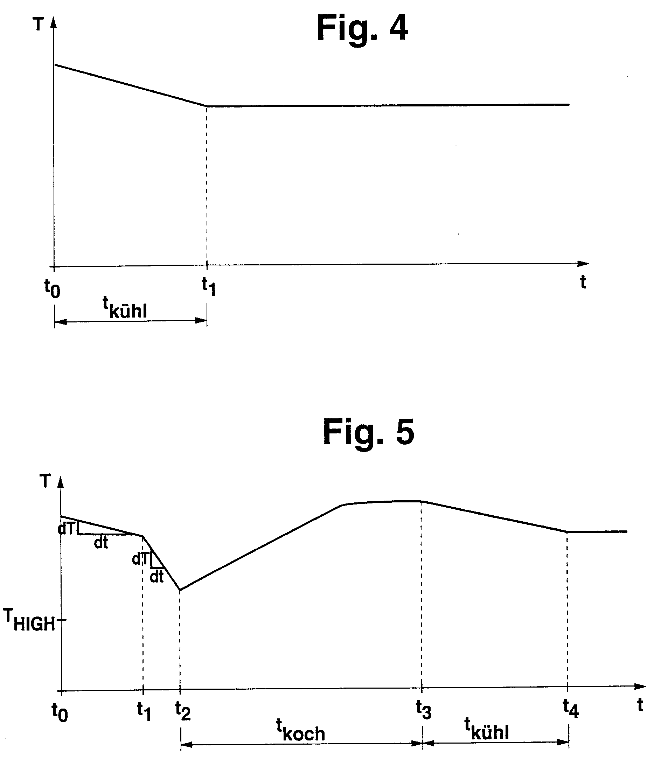

Fig. 4 zeigt, daß nach Ablauf der Zeitdauer t_{heiz}, bzw. t_{koch} das Wasser für eine Zeitdauer t_{kühl} abgekühlt wird. Diese Zeitdauer t_{kühl} ist dabei in vorteilhafter Weise konstant vorgegeben. Wenn die Abkühlphase t_{kühl} zum Zeitpunkt t₁ abgelaufen ist, ergibt sich eine konstante Temperatur, das heißt, daß die Temperatur dann durch entsprechendes Zu-und Abschalten der Heizung auf die Wassertemperatur, die sich zum Zeitpunkt t₁ der Fig. 4 eingestellt hat, konstant geregelt wird.

Der Darstellung der Fig. 5 ist wiederum zu entnehmen, daß das Wasser nach Erreichen der Siedetemperatur abgekühlt wird. Dabei zeigt sich zwischen dem Zeitpunkt t₀ und t₁, daß die zeitliche Änderung der Temperatur einen Wert annimmt, der einem normalen Abkühlvorgang entspricht. Zwischen den Zeitpunkten t₁ und t₂ wird dabei offensichtlich kaltes Wasser nachgefüllt, das heißt, daß die zeitliche Änderung der Temperatur kleiner wird als ein Grenzwert m_{grenz} der zeitlichen Änderung der Temperatur, der gerade noch einem normalen Abkühlvorgang bei nahezu leerem bzw. leerem Wasserbehälter entspricht. Diese starke zeitliche Änderung der Temperatur im negativen Sinne, das heißt der starke Temperaturabfall mit der Zeit, liegt dann daran, daß kaltes Wasser nachgefüllt wurde. Das Wasser wird dann wiederum für die Zeitdauer t_{koch} aufgeheizt zwischen den Zeitpunkten t₂ und t₃. Ein Aufheizen zunächst auf die Temperatur T_{HIGH} entfällt, da das Wasser auch durch das Nachkippen des kalten Wassers diese Temperatur T_{HIGH} nicht unterschritten hat. Zwischen den Zeitpunkten t₃ und t₄ findet dann wieder die Abkühlphase für die Zeitdauer t_{kühl} statt, wobei das Wasser ab dem Zeitpunkt t₄ wiederum auf die Temperatur konstant geregelt wird, die das Wasser zum Zeitpunkt t₄ eingenommen hat.

Das Verfahren kann beispielsweise realisiert werden, indem einem Mikroprozessor die Meßsignale eines Temperatursensors zugeführt werden (mittels eines A/D-Wandlers). In dem Mikroprozessor werden die aufgenommenen Signale des Temperatursensors weiterverarbeitet. Dabei werden beispielsweise aktuelle Werte gespeichert, soweit sie für künftige Auswertungen noch benötigt werden. Die weiteren Auswertungen wie z.B. die Ableitung von Anstiegswerten (Bestimmen der Steigung) sind als geeignete Programmierung des Mikroprozessors hinreichend bekannt.

## Patentansprüche

1. Verfahren zur Regelung der Wassertemperatur in einer Brühgetränkemaschine, wobei das Wasser in einem offenen Wasserbehälter zunächst bis zum Siedepunkt erhitzt wird, wobei der Siedepunkt erreicht wird, dadurch gekennzeichnet, daß das Wasser von der Ausgangstemperatur Tᵢ bis zu einer Temperatur T_{HIGH} erhitzt wird (701, 704), bei der das Wasser unter üblichen Umgebungsbedingungen sicher noch nicht siedet, daß die zeitliche Änderung der Temperatur dT/dt beim Erhitzen auf die Temperatur T_{HIGH} ermittelt wird (705, 708), daß bei Erreichen der Temperatur T_{HIGH} aus der Differenz zwischen 100 Grad C und T_{HIGH}, sowie aus der zeitlichen Änderung der Temperatur dT/dt eine Zeit t_{heiz}, ermittelt wird (702), und daß das Wasser bei Erreichen der Temperatur T_{HIGH} während der Zeit t_{heiz} weitergeheizt wird (702).

2. Verfahren zur Regelung der Wassertemperatur in einer Brühgetränkemaschine, wobei das Wasser in einem offenen Wasserbehälter zunächst bis zum Siedepunkt erhitzt wird, wobei der Siedepunkt erreicht wird, dadurch gekennzeichnet, daß das Wasser ausgehend von einer Temperatur Tᵢ erhitzt wird, indem im Falle, daß die Temperatur Tᵢ größer ist als eine Temperatur T_{LOW} (603), das Wasser bis auf die Temperatur T_{HIGH} erhitzt wird, wenn dessen Temperatur Tᵢ kleiner ist als die Temperatur T_{HIGH} (604), und anschließend während einer bestimmten Zeit t_{koch} geheizt wird (605), wobei die Zeit t_{koch} so bemessen ist, daß während dieser bestimmten Zeit das Wasser im voll gefüllten Heizbehälter unter Atmosphärendruck von 1 bar von der Temperatur T_{HIGH} auf den Siedepunkt (100 Grad C) geheizt werden kann und indem im Falle, daß die Temperatur Tᵢ kleiner ist als die Temperatur T_{LOW}, das Wasser auf die Temperatur T_{HIGH} erhitzt wird (701, 704), wobei die zeitliche Änderung der Temperatur dT/dt beim Erhitzen auf die Temperatur T_{HIGH} ermittelt wird (705, 708), wobei bei Erreichen der Temperatur T_{HIGH} aus der Differenz zwischen 100 Grad C und T_{HIGH}, sowie aus der zeitlichen Änderung der Temperatur dT/dt eine Zeit t_{heiz} ermittelt wird (702), wobei das Wasser bei Erreichen der Temperatur T_{HIGH} während der Zeit t_{heiz} weitergeheizt wird (702).

3. Verfahren nach Anspruch 1 oder 2, dadurch gekennzeichnet, daß die Zeit t_{heiz} proportional der Differenz zwischen 100 Grad C und T_{HIGH}, sowie umgekehrt proportional zur zeitlichen Änderung der Temperatur dT/dt ist.

4. Verfahren nach einem der Ansprüche 1 bis 3, dadurch gekennzeichnet, daß die zeitliche Änderung der Temperatur dT/dt aus mehreren Stützstellen gemittelt wird (707, 708).

5. Verfahren nach Anspruch 4, dadurch gekennzeichnet, daß Werte der zeitlichen Änderung der Temperatur dT/dt, die kleiner als ein vorgebbarer Mindestwert mₘᵢₙ oder größer als ein vorgebbarer Maximalwert mₘₐₓ sind, bei der Mittelung unberücksichtigt bleiben (706, 709, 710, 711).

6. Verfahren nach Anspruch 5, dadurch gekennzeichnet, daß nur Werte der zeitlichen Änderung der Temperatur verwendet werden, die ermittelt wurden, nachdem die zeitliche Änderung der Temperatur aufgetreten war, die kleiner als der vorgebbare Mindestwert mₘᵢₙ bzw. größer als der vorgebbare Maximalwert mₘₐₓ war (709, 710).

7. Verfahren nach Anspruch 5, dadurch gekennzeichnet, daß bei Auftreten eines Wertes der zeitlichen Änderung der Temperatur, der kleiner als ein vorgebbarer Mindestwert mₘᵢₙ oder größer als ein vorgebbarer Maximalwert mₘₐₓ ist, das Wasser nach Erreichen der Temperatur T_{High} für eine bestimmte Zeit t_{koch} weitergeheizt wird.

8. Verfahren nach einem der Ansprüche 1 bis 7, dadurch gekennzeichnet, daß das Wasser abgekühlt wird, nachdem es den Siedepunkt erreicht hat (607, 802).

9. Verfahren nach Anspruch 8, dadurch gekennzeichnet, daß das Wasser abgekühlt wird, indem für eine bestimmte Zeit t_{kühl} die Heizung abgeschaltet wird (806, 807).

10. Verfahren nach Anspruch 8 in Rückbeziehung zumindest auf Anspruch 2, dadurch gekennzeichnet, daß das Wasser abgekühlt wird, indem für eine bestimmte Zeit t_{kühl} die Heizung abgeschaltet wird, wobei die Heizung unmittelbar eingeschaltet wird, wenn während des Abkühlens die zeitliche Änderung der Temperatur dT/dt kleiner als ein vorgebbarer Grenzwert m_{grenz} ist, wobei die Heizung eingeschaltet wird, um das Wasser auf die Temperatur T_{HIGH} zu erhitzen, wenn dessen Temperatur kleiner als T_{HIGH} ist und wobei die Heizung anschließend für eine Zeit t_{koch} eingeschaltet bleibt, und indem anschließend die Heizung wiederum für die bestimmte Zeit t_{kühl} abgeschaltet wird (804, 805).

11. Verfahren nach Anspruch 9 oder 10, dadurch gekennzeichnet, daß die Heizung nach Ablauf der bestimmten Zeit t_{kühl} so geregelt wird, daß das Wasser die Temperatur hält, die es nach Ablauf der bestimmten Zeit hatte (808).

## Claims

1. A method of controlling the water temperature in a beverage-brewing apparatus in which the water is initially heated in an open water reservoir up to the boiling point, said boiling point being reached, **characterized in that** the water is heated from the initial temperature Tᵢ up to a temperature T_{HIGH} (701, 704) at which it is ensured that the water does not boil as yet under conventional environmental conditions, in that the rate of change of the temperature dT/dt during heating to the temperature T_{HIGH} is determined (705, 708), in that on reaching the temperature T_{HIGH} a period of time t_{heiz} is determined from the difference between 100°C and T_{HIGH} as well as from the rate of change of the temperature dT/dt (702), and in that on reaching the temperature T_{HIGH} the water continues to be heated during the period of time t_{heiz} (702).

2. A method of controlling the water temperature in a beverage-brewing apparatus in which the water is initially heated in an open water reservoir up to the boiling point, said boiling point being reached, **characterized in that** the water is heated starting from a temperature Tᵢ, in that in the event of the temperature Tᵢ being higher than a temperature T_{LOW} (603) the water is heated up to the temperature T_{HIGH} if the water temperature Tᵢ is lower than the temperature T_{HIGH} (604), heating subsequently continuing for a set period of time t_{koch} (605), said period of time t_{koch} being dimensioned such that during this set time period the water contained in a reservoir filled to capacity at an atmospheric pressure of 1 bar is heatable from the temperature T_{HIGH} to the boiling point (100°C), and in that in the event of the temperature Tᵢ being lower than the temperature T_{LOW} the water is heated to the temperature T_{HIGH} (701, 704), with the rate of change of the temperature dT/dt being determined during heating to the temperature T_{HIGH} (705, 708), wherein on reaching the temperature T_{HIGH} a time period t_{heiz} is determined from the difference between 100°C and T_{HIGH} as well as from the rate of change of the temperature dT/dt (702), with the water continuing to be heated during the period of time t_{heiz} on reaching the temperature T_{HIGH} (702).

3. A method as claimed in claim 1 or claim 2, **characterized in that** the period of time t_{heiz} is proportional to the difference between 100°C and T_{HIGH}, as well as inversely proportional to the rate of change of the temperature dT/dt.

4. A method as claimed in any one of the claims 1 to 3, **characterized in that** the rate of change of the temperature dT/dt is averaged from several measuring points (707, 708).

5. A method as claimed in claim 4, **characterized in that** values of the rate of change of the temperature dT/dt that are smaller than a predeterminable minimum value mₘᵢₙ or greater than a predeterminable maximum value mₘₐₓ are ignored in the averaging process (706, 709, 710, 711).

6. A method as claimed in claim 5, **characterized in that** only values of the rate of change of the temperature are employed that were determined after the variation of temperature with time had occurred that was smaller than the predeterminable minimum value mₘᵢₙ or greater than the predeterminable maximum value mₘₐₓ (709, 710).

7. A method as claimed in claim 5, **characterized in that** on the occurrence of a value of the rate of change of the temperature that is smaller than a predeterminable minimum value mₘᵢₙ or greater than a predeterminable maximum value mₘₐₓ, the water continues to be heated for a set period of time t_{koch} after the temperature T_{HIGH} is reached.

8. A method as claimed in any one of the claims 1 to 7, **characterized in that** the water is cooled down on reaching the boiling point (607, 802).

9. A method as claimed in claim 8, **characterized in that** the water is cooled down by switching off the heating device for a set period of time t_{kühl} (806, 807).

10. A method as claimed in claim 8, referring back at least to claim 2, **characterized in that** the water is cooled down in that the heating device is switched off for a set period of time t_{kühl}, wherein the heating device is switched on directly if during cooling the rate of change of the temperature dT/dt is smaller than a predeterminable limit value m_{grenz}, wherein the heating device is switched on for heating the water to the temperature T_{HIGH} if the water temperature is lower than T_{HIGH}, and wherein subsequently the heating device remains switched on for a period of time t_{koch}, and in that subsequently the heating device is switched off again for the set period of time t_{kühl} (804, 805).

11. A method as claimed in claim 9 or claim 10, **characterized in that** the heating device is controlled upon expiration of the set period of time t_{kühl}, such that the water temperature is maintained at the value it had after the set time period has elapsed (808).

## Revendications

1. Procédé de régulation de la température de l'eau dans une machine de préparation de boissons infusées, l'eau étant tout d'abord portée au point d'ébullition dans un réservoir d'eau ouvert, où le point d'ébullition est atteint, caractérisé en ce que l'eau est chauffée de la température initiale Tᵢ jusqu'à une température T_{HAUTE} (701, 704), dans lequel l'eau n'est pas encore portée de façon sûre à ébullition dans des conditionnements d'environnement usuelles, en ce que la variation temporelle de la température dT/dt est détectée lors du chauffage à la température T_{HAUTE} (705, 708), en ce que lors de l'obtention de la température T_{HAUTE} à partir de la différence entre 100°C et T_{HAUTE}, ainsi qu'à partir de la variation temporelle de la température dT/dt est détecté un temps t_{chauffage} (702), et en ce que l'eau est encore chauffée lors de l'obtention de la température T_{HAUTE} durant le temps t_{chauffage} (702).

2. Procédé de régulation de la température de l'eau dans une machine de préparation de boissons infusées, selon lequel l'eau dans un réservoir d'eau ouvert est tout d'abord chauffée jusqu'au point d'ébullition, selon lequel le point d'ébullition est atteint, caractérisé en ce que l'eau est chauffée depuis une température Tᵢ, dans lequel, dans le cas où la température Tᵢ est supérieure à une température T_{BASSE} (603), l'eau est chauffée jusqu'à la température T_{HAUTE}, lorsque la température Tᵢ de celle-ci est inférieure à la température T_{HAUTE} (604), et ensuite est chauffée durant un temps déterminé t_{ébullition} (605), le temps t_{ébullition} étant mesuré de sorte que durant ce temps déterminé, l'eau dans le réservoir de chauffage complètement rempli peut être chauffée sous une pression atmosphérique de 1 bar depuis la température T_{HAUTE} jusqu'au point d'ébullition (100°C) et dans lequel, dans le cas où la température Tᵢ est inférieure a la température T_{BASSE}, l'eau est chauffée à la température T_{HAUTE} (701, 704), la variation temporelle de la température dT/dt étant détectée lors du chauffage à la température T_{HAUTE} (705, 708), lors de l'obtention de la température T_{HAUTE} à partir de la différence entre 100°C et T_{HAUTE}, ainsi qu'à partir de la variation temporelle de la température dT/dt est détecté un temps t_{chauffage} (702), l'eau lors de l'obtention de la température T_{HAUTE} étant encore chauffée durant le temps t_{chauffage} (702).

3. Procédé selon la revendication 1 ou 2, caractérisé en ce que le temps t_{chauffage} est proportionnel à la différence entre 100°C et T_{HAUTE}, ainsi qu'inversement proportionnel à la variation temporelle de la température dT/dt.

4. Procédé selon l'une quelconque des revendications 1 à 3, caractérisé en ce que la variation temporelle de la température dT/dt est obtenue à partir de plusieurs points d'appui (707, 708).

5. Procédé selon la revendication 4, caractérisé en ce que des valeurs de la variation temporelle de la température dT/dt, qui sont inférieures a une valeur minimale pouvant être prédéterminée mₘᵢₙ ou supérieures à une valeur maximale pouvant être prédéterminée mₘₐₓ, demeurent ignorées lors de la formation de la moyenne (706, 709, 710, 711).

6. Procédé selon la revendication 5, caractérise en ce que seulement des valeurs de la variation temporelle de la température sont utilisées, qui ont été détectées, après que la variation temporelle de la température se soit produite, qui sont inférieures à la valeur minimale pouvant être prescrite mₘᵢₙ ou supérieures à la valeur maximale pouvant être prescrite mₘₐₓ (709, 710).

7. Procédé selon la revendication 5, caractérisé en ce que, lors de l'apparition d'une valeur de la variation temporelle de la température, qui est inférieure à une valeur minimale pouvant être prescrite mₘᵢₙ ou supérieure à une valeur maximale pouvant être prescrite mₘₐₓ, l'eau continue à être chauffée après l'obtention de la température T_{HAUTE}, pendant un temps déterminé t_{ébullition}.

8. Procédé selon l'une quelconque des revendications 1 à 7, caractérisé en ce que l'eau est refroidie après avoir atteint le point d'ébullition (607, 802).

9. Procédé selon la revendication 8, caractérisé en ce que l'eau est refroidie pendant que le chauffage est coupé pendant un temps déterminé t_{refroidissement} (806, 807).

10. Procédé selon la revendication 8, rattachée au moins à la revendication 2, caractérisé en ce que l'eau est refroidie pendant que le chauffage est coupé pendant un temps déterminé t_{refroidissement}, le chauffage étant immédiatement mis en marche, lorsque durant le refroidissement, la variation temporelle de la température dT/dt est inférieure à une valeur limite pouvant être prédéterminée mₗᵢₘᵢₜₑ, le chauffage étant mis en marche afin de chauffer l'eau à la température T_{HAUTE}, lorsque la température de celle-ci est inférieure à T_{HAUTE} et le chauffage étant ensuite maintenu pendant un temps t_{ébullition}, et dans lequel ensuite le chauffage est à nouveau coupé pendant le temps déterminé t_{refroidissement} (804, 805).

11. Procédé selon la revendication 9 ou 10, caractérisé en ce que le chauffage est régulé après expiration du temps déterminé t_{refroidissement}, de sorte que l'eau soit maintenue à la température qu'elle avait après expiration du temps déterminé (808).
